# EUROPÄISCHE PATENTSCHRIFT

(11) **EP 0 305 328 B1**
(45) Veröffentlichungstag und Bekanntmachung des Hinweises auf die Patenterteilung: **05.04.1995**
(21) Anmeldenummer: 88810557.4
(22) Anmeldetag: 16.08.1988
(51) Int. Cl.: C09B 67/52, C09B 48/00, C09B 67/22, C09D 4/00

(54) **Modifiziertes beta-Chinacridon-Pigment**
Modified beta-quinacridone pigment
Pigment de bêta-quinacridone modifiée

(30) Priorität: 24.08.1987 US 88751
(43) Veröffentlichungstag der Anmeldung: 01.03.1989
(73) Patentinhaber: CIBA-GEIGY AG, 4002 Basel (CH)
(72) Erfinder: Jaffe, Edward E., Wilmington Delaware 19810 (US)

(56) Entgegenhaltungen:
- EP-A- 0 190 999
- DE-A- 2 034 499
- FR-A- 1 247 659
- US-A- 2 844 485
- JOURNAL OF THE SOCIETY OF DYERS AND COLOURISTS, Band 93, Nr. 1, 1977, Seiten
- 15-17, Bradford, GB; A. WHITAKER: "Fresh X-ray data for two forms of lineartrans-quinacridone, C.I. pigment violet 19"
- CHEMICAL ABSTRACTS, Band 88, Nr. 7, 3. April 1978, Seite 71, ZusammenfassungNr. 91044y, Columbus, Ohio, US; & JP-A-52 091 926 (MITSUBISHI CHEMICAL INDUSTRIES CO., LTD) 01-08-1977

## Beschreibung

Die vorliegende Anmeldung betrifft eine neue magentafarbene Modifikation von β-Chinacridon.

Vom linear-trans-Chinacridon 7,14-Dioxo-5,7,12,14-tetrahydrochinolino-[2,3-b]-acridin der Formel 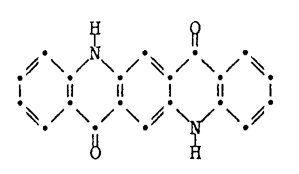
sind drei polymorphe Modifikationen bekannt. Die α-Modifikation, wie sie in der US-PS 2 844 484 beschrieben ist und die γ-Modifikation, die in den US-PS 2 844 581 und 2 969 366 beschrieben ist, sind blaustichigrote Pigmente, während die β-Modifikation, wie sie in der US-PS 2 844 485 beschrieben ist, ein violettes Pigment darstellt. Vor einiger Zeit wurde erkannt, dass γ-Chinacridon seinerseits in zwei Modifikationen vorkommen kann (vgl. US-PS 3 074 950), eine ältere, blaustichigrote Modifikation, wie sie in der US-PS 2 844 581 beschrieben ist und eine in jüngerer Zeit erkannte gelbstichigrote Modifikation, wie sie in der US-PS 3 074 950 offenbart wird. Diese Farbunterschiede sind bezeichnend für Pigmente von relativ grosser Teilchengrösse, bei hohem Kristallinitätsgrad und bei scharf definiertem Röntgenbeugungsdiagramm.

Von der β-Modifikation ist nur eine Form bekannt. Ihr Röntgenbeugungsdiagramm, das in der US-PS 2 844 485 beschrieben ist, ist durch die Netzebenenabstände (d-Werte) 15,23 Å (starke Intensität), 7,55 Å (mittlere Intensität), 5,47 Å (mittlere Intensität), 4.06 Å (mittlere Intensität) und 3,31 Å (starke Intensität) charakterisiert.

Es ist nun gefunden worden, dass man überraschenderweise auch eine zweite β-Chinacridon-Modifikation herstellen kann. Die neue Form, im folgenden β_{I}-Modifikation genannt, entsteht, wenn man das Chinacridon-Polymorph nach den in der vorliegenden Anmeldung beschriebenen Verfahren herstellt. Sie unterscheidet sich von der bekannten β-Modifikation (β_{II}) durch ein bestimmtes, verschiedenes Röntgenbeugungsdiagramm und durch eine beachtliche Nuancenverschiebung von Violett nach Magenta. Die neue Modifikation ist von besonderer Bedeutung bei relativ grosser Teilchengrösse (niedrige spezifische Oberfläche) und bei hohem Kristallinitätsgrad. Bei der bevorzugten Partikelgrösse zeigt die neue Modifikation eine erhebliche Lichtstreuung und demzufolge hohe Deckkraft, die insbesondere für den Einsatz in Vollton-Automobillacken von grosser Bedeutung ist.

Die neue β_{I}-Modifikation unterscheidet sich von der bekannten β-Modifikation durch beachtliche Verschiebungen der Netzebenenabstände im Bereich von 5,5 Å, 4,2 Å, 4,0 Å und 3,2 Å. Dementsprechend erscheint für die neue Modifikation eine völlig neue schwache Linie bei 4,24 Å. Die Einzellinie von Netzebenenabstand 5,47 Å bei der bekannten β_{II}-Modifikation wird in zwei Linien ungefähr gleicher Intensität (die zweite Linie ist leicht schwächer) bei 5,59 Å und 5,50 Å aufgeteilt. Die Netzebenenabstände 4,06 Å und 3,31 Å sind jeweils nach 3,99 Å und 3,26 Å verschoben. Das vollständige Röntgenbeugungsdiagramm der neuen β_{I}-Modifikation, welches nach üblichen Methoden mit Hilfe eines Phillips 2500 D® Röntgen-Difractometer bestimmt wurde, ist durch folgende Netzebenenabstände (und entsprechende doppelte Glanzwinkel) charakterisiert

| d-Werte in Å | relative Intensität | doppelte Glanzwinkel 2ϑ |
|---|---|---|
| 14,88 | stark | 5,94 |
| 7,49 | mittel | 11,82 |
| 5,59 | mittel | 11,85 |
| 5,50 | mittel | 16,12 |
| 5,05 | schwach | 17,55 |
| 4,77 | schwach | 18,60 |
| 4,24 | schwach | 20,95 |
| 3,99 | mittel | 22,28 |
| 3,73 | schwach | 23,85 |
| 3,26 | stark | 27,36 |

Es wurde, wie bereits erwähnt, gefunden, dass die neue β_{I}-Modifikation von Chinacridon überraschenderweise bei einer bestimmten mittleren Partikelgrössenverteilung oder spezifischen Oberfläche für besondere Zwecke ausserordentlich gut geeignet ist.

Die vorliegende Erfindung betrifft demnach ein β-Chinacridon-Pigment in seiner magentafarbenen Modifikation, deren Röntgenbeugungsdiagramm durch die Netzebenenabstände 14,88 Å und 3,26 Å starker Intensität, 7,49 Å, 5,59 Å, 5,50 Å und 3,99 Å mittlerer Intensität und 5,05 Å, 4,77 Å, 4,24 Å und 3,73 Å schwacher Intensität charakterisiert ist.

Von Interesse ist auch die Kombination der magentafarbenen Modifikation von β-Chinacridon gemäss der oben angegebenen Definition mit einer kleinen Menge, zweckmässig weniger als 50 Gew.% der bekannten violetten β-Chinacridon-Modifikation, deren Röntgenbeugungsdiagramm durch die Netzebenenabstände 15,23 Å, 7,55 Å, 5,47 Å, 4,06 Å und 3,31 Å charakterisiert ist. Diese Pigmentmischung zeigt sowohl coloristisch, wie bezüglich der Echtheiten, die gleichen charakteristischen Eigenschaften, wie das β_{I}-Chinacridon, aber in etwas vermindertem Masse.

Organische Pigemente, die in organischen Lösungsmitteln hergestellt werden, entstehen im allgemeinen mit einer relativ grossen Teilchengrösse. Dies gilt auch für die Synthese von Chinacridon. Beim ersten synthetischen Handelsverfahren (US-PS 2 969 366) wird in der letzten Stufe 6,13-Dihydrochinacridon zu Chinacridon oxydiert. Es entsteht, je nach Kristallmodifikation, ein Chinacridon von relativ grosser Teilchengrösse. Um die γ-Modifikation zu erhalten, muss man das ursprüngliche α-6,13-Dihydrochinacridon (US-PS 3 009 916) in die β-Modifikation umwandeln (US-PS 3 007 930) und letztere zum γ-Chinacridon oxydieren. Die Oxydation wird in wässrigem Methanol oder einem ähnlichen Lösungsmittel durchgeführt, bei relativ niedriger Natriumhydroxyd-Konzentration, im allgemeinen unter 10 % (US-PS 2 969 366, Tabelle I) und bevorzugt ca. 3 %, bezogen auf den ganzen flüssigen Anteil der Reaktionsmischung. Unter diesen Bedingungen erhält man ein Pigment von relativ grosser Teilchengrösse mit einer spezifischen Oberfläche von 20-30 m²/g (US-PS 2 844 581). Dieses Rohpigment ist relativ leicht, deckend und farbschwach. Obwohl es für die Erzeugung von deckenden Volltonfarben geeignet ist, muss die Teilchengrösse des γ-Chinacridon-Rohpigments zur Erhaltung der maximalen Farbstärke oder eines dunklen Volltones in Metalleffektlackierungen durch eine der verschiedenen üblichen Methoden so verkleinert werden, dass ein Pigment mit einer spezifischen Oberfläche von mindestens 60 m²/g entsteht (US-PS 2 844 581).

Wenn man hingegen β-Chinacridon durch Oxydation von 6,13-Dihydrochinacridon herstellt, ist die Modifikation des 6,13-Dihydrochinacridon belanglos, weil es nötig ist das Natriumsalz desselben zu bilden, welches zum Natriumsalz des Chinacridons oxydiert wird, das seinerseits zu β-Chinacridon in situ hydrolysiert wird. Um das nötige Natriumsalz herzustellen, ist eine relativ hohe Natriumhydroxyd-Konzentration von über 10 %, bevorzugt von 29,5 %, bezogen auf den gesamten flüssigen Anteil der Reaktionsmischung nötig (US-PS 2 969 366). Wegen der hohen Basenkonzentration in Verbindung mit dem wässrigen Alkohol, entsteht ein β-Chinacridon-Rohpigment mit einer durchschnittlichen mittleren Teilchengrösse über 1 »m und einer spezifischen Oberfläche von 3 bis 8 m²/g. Eine durchschnittliche mittlere Teilchengrösse von über 1 »m übertrifft die minimale für eine angemessene Deckkraft erforderliche Partikelgrösse und ergibt farbschwache Ausfärbungen. Das durch Oxydation erhaltene Produkt ist die konventionelle β-Modifikation. Dieses Rohprodukt ist als Pigment nicht geeignet. Wenn man es zerkleinert bis zu einer Teilchengrösse, die einer spezifischen Oberfläche von mindestens 60 m²/g entspricht, wie in US-PS 2 844 484 beschrieben, erhält man ein violettes Pigment (im folgenden β_{II}-Modifikation genannt) von beachtlicher Qualität. In derselben Patentschrift wird aber die Unbrauchbarkeit des Rohpigments durch die Behauptung unterstrichen, die Erfahrung hätte gezeigt, dass Produkte dieses Typus, deren spezifische Oberfläche bedeutend unter 60 m²/g liegt, eine derart niedrige Farbstärke aufwiesen, dass sie kaum wirtschaftliche Bedeutung erlangen könnten.

Vergleicht man die neue β_{I}-Modifikation mit der bekannten β_{II}-Modifikation von annähernd gleicher Partikelgrösse, so ist letztere bedeutend dunkler, blauer und stumpfer im Vollton und blauer und stumpfer im Verschnitt.

Wird ein im Handel erhältliches β-Chinacridon-Pigment kleiner Partikelgrösse (z.B. ®RT-795-D der CIBA-GEIGY, ohne Verdünnungsmittel) zur Vergrösserung der Partikelgrösse in heissem Dimethylformamid behandelt, so tritt keine Modifikationsumwandlung ein. Beim Erhitzen des Pigments in der 15,5-fachen Menge (Gewichtsteile) Dimethylformamid bei verschiedenen Temperaturen und verschiedenen Behandlungszeiten erhält man Produkte mit einer spezifischen Oberfläche von 11,6 bis 19,9 m²/g, die eine höhere Deckkraft als das Ausgangsmaterial aufweisen, die aber bläulich im Vollton und Violett im Verschnitt bleiben, und bei Abnahme der spezifischen Oberfläche allmählich farbschwächer werden.

In JP-A 56-45512 ist die Herstellung von β-Chinacridon mit einer durchschnittlichen mittleren Partikelgrösse zwischen 0,1 und 0,3 »m durch Oxydation von Dihydrochinacridon in basischem Dimethylsulfoxyd und anschliessendem Eingiessen der Reaktionsmischung in Methanol beschrieben. Man erhält Produkte der β-Modifikation, die im Vollton sehr dunkle und im Verschnitt intensiv-blaue Ausfärbungen ergeben.

Es ist nun zusätzlich gefunden worden, dass β-Chinacridon der β_{I}-Modifikation oder eine Kombination von β_{I}- und β_{II}-Modifikation, bevorzugt mit einer durchschnittlichen mittleren Partikelgrösse zwischen 0,2 und 0,8 »m, die annähernd einer spezifischen Oberfläche zwischen 9 und 25 m²/g entspricht, ein Produkt von grossem Wert darstellt, insbesondere für den Einsatz in Automobillacken und bevorzugt in Kombination mit orangen Pigmenten zur Erzeugung vn roten Volltönen verschiedener Nuancen. Im obenerwähnten Partikelgrössenbereich sind auch Farbstärke und Lichtbeständigkeit optimal. Die neue Pigmentmodifikation ist aber nicht nur zum Färben von Lacken geeignet, sondern auch von Kunststoffen, Druckfarben, Leimfarben, Binderfarben, u.s.w. Wie die konventionelle β_{II}-Modifikation stellt auch die β_{I}-Modifikation ein Pigment guter Migrationsbeständigkeit dar.

Ganz unerwartet zeigt das erfindungsgemässe β_{I}-Chinacridon gegenüber dem bekannten β_{II}-Chinacridon eine beachtliche Verschiebung der Nuance von Violett (charakteristische Farbe von β_{II}-Chinacridon) nach Magenta. Das neue Produkt ist demnach bedeutend heller und weist eine viel bessere Deckkraft auf.

Verschiedene Herstellungsmethoden führen zur erfindungsgemässen β_{I}-Chinacridon-Modifikation mit der gewünschten relativ niedrigen spezifischen Oberfläche. Die neue Pigmentmodifikation kann entweder durch kontrollierte Partikelzerkleinerung eines Rohpigments oder durch Uebermahlung des Rohpigments zu kleineren Teilchen und anschliesendem Anwachsen derselben zur gewünschten Partikelgrösse bzw. spezifischen Oberfläche durch Kristallisierung erhalten werden. Folgende Verfahren eignen sich zur Herstellung der erfindungsgemässen Pigmentmodifikation:
(1) Vermahlen von α-Chinacridon, bevorzugt kleiner Teilchengrösse, in Gegenwart von Alkohol und Base;
(2) Vermahlen von β_{II}-Chinacridon-Rohpigment grosser Teilchengrösse (spezifische Oberfläche 3-8 m²/g) in Gegenwart von Alkohol, Base und geeigneten Mahlhilfsmitteln;
(3) Ausführung gemäss (2) in zwei Stufen durch Vorvermahlen des β_{II}-Chinacridon-Rohpigments und anschliessendem Reifen bzw. Anwachsen der Teilchen durch Vermahlen in einem Alkohol/Base-System;
(4) Reifen bzw. Anwachsen eines zerkleinerten β-Chinacridons (a) durch Vermahlen in Gegenwart von Alkohol und Base oder (b) durch Rückflusskochen in basischem Alkohol.

Bezüglich Verfahren (1) wurde überraschenderweise festgestellt, dass das Vermahlen von α-Chinacridon, der am wenigsten hitzebeständigen Chinacridonmodifikation, insbesondere kleiner Partikelgrösse, in basischem Alkohol nicht nur zum Wachstum (Reifung) der Pigmentteilchen, sondern zur vollständigen Umwandlung zum β_{I}-Chinacridon der vorliegenden Erfindung führt. Das Rückflusskochen des gleichen α-Chinacridons im selben alkoholischen Medium führt hingegen zu γ-Chinacridon. α-Chinacridon kleiner Partikelgrösse kann durch längeres Vermahlen von γ-Chinacridon erhalten werden, wenn genügend Energie in das System geführt wird. Eine weitere Möglichkeit α-Chinacridon herzustellen, besteht darin, irgend ein Rohchinacridon in einer konzentrierten Säure, wie Schwefelsäure, Polyphosphorsäure, u.s.w. zu lösen und die erhaltene Lösung in Wasser zu giessen. Nach Isolierung des Produktes, Waschen und Trocknen, erhält man α-Chinacridon kleiner Partikelgrösse. Unabhängig von seiner Herstellungsmethode ergibt α-Chinacridon beim Vermahlen in einem Alkohol/Base-System das gewünschte β_{I}-Chinacridon mit hohem Kristallinitätsgrad, guter Deckkraft und starker Magentafarbe.

Das Verfahren (2) erlaubt die Herstellung desselben Produktes ausgehend von β_{II}-Chinacridon-Rohpigment grosser Partikelgrösse (spezifische Oberfläche 3-8 m²/g) im Einstufenverfahren. Das Ausgangsprodukt wird in basischem Alkohol in Gegenwart von Keramik-Perlen oder Stahlschrot vermahlen, wobei sowohl Partikelzerkleinerung wie Kristallwachstum (Reifung), d.h. Einstellung der gewünschten Partikelgrössenverteilung und Umwandlung in die erfindungsgemässe β_{I}-Modifikation eintritt. Um die bestmöglichen Pigmenteigenschaften zu erhalten empfiehlt es sich ein möglichst hohes Gewichtsverhältnis Flüssigkeit:Pigment von ca. 10-20:1 einzuhalten. Zweckmässig wird bei Temperaturen zwischen 20 und 50°C während 24 bis 72 Stunden gemahlen.

Das Zweistufenverfahren (3) umfasst eine Vorvermahlung von rohem β-Chinacridon zu hochaggregierten subpigmentären Partikeln und Ausreifung bzw. Kristallwachstum in einer anschliessenden Mahlung in einem Alkohol/Base-System. Zur Vorvermahlung können verschiedene Mahlhilfsmittel verwendet werden, wie z.B. Stahlkugeln, Nägel, Stahlschrot oder Keramikkugeln oder auch dieselben Keramikperlen, die für die anschliessende Alkohol/Base-Mahlung verwendet werden. Wenn die Vormahlung mit stählernen Mahlhilfsmitteln durchgeführt wird, ist es zweckmässig den Alkohol abzudestillieren und die erhaltene wässrige Pigmentaufschlämmung mit verdünnter Mineralsäure zu extrahieren, um allfällige Metallrückstände aus dem Mahlvorgang zu entfernen. Um die Säurebehandlung und die daraus resultierende leichte Nuancenverschiebung nach Blau in Vollton und Verschnitt zu vermeiden, ist es empfehlenswert Keramik-Mahlhilfsmittel zu verwenden. Diese können sowohl für die Vorvermahlung als auch für die anschliessende Alkohol/Base-Mahlung verwendet werden. Diese Verfahrensweise erlaubt den Einsatz einer grösseren Pigmentmenge und kann mit einem niedrigeren Gewichtsverhältnis Flüssigkeit:Pigment von 6,5:1 durchgeführt werden.

Gemäss Verfahren (4a) wird ein verdünnungsmittelfreies β-Chinacridon kleiner Partikelgrösse in einem Alkohol/Base-System mit Keramik-Mahlhilfsmittel vermahlen und das erhaltene Pigment nach dem Abdestillieren des Alkohols durch Filtration isoliert. Man erhält ein magentafarbenes Pigment der erfindugsgemässen β_{I}-Modifikation mit hoher Deckkraft. Als Alternative kann, gemäss Verfahren (4b), dasselbe Ausgangspigment in basischem Alkohol am Rückfluss gekocht werden. Man erhält ein ähnliches Produkt, wie gemäss Verfahren (4a), das allerdings sowohl im Vollton, wie auch im Verschnitt leicht farbschwächer ist.

Wie bereits erwähnt, sind, um die Extraktion mit Säure zu vermeiden, Keramikperlen die geeignetsten Mahlhilfsmittel. Obwohl Mahlkugeln verschiedener Grössen erhältlich sind und verwendet werden können, werden Mahlperlen von 1,6 - 2,5 mm oder von 2,5 - 3,15 mm Durchmesser, die aus einer kristallinen Zirkonium- und einer amorphen Kieselsäurephase der entsprechenden Oxide hergestellt werden, bevorzugt. Ebenfalls geeignet sind Zirkoniumoxidperlen, die einen kleinen Anteil an Magnesiumoxid enthalten.

Unter Vorvermahlen, gemäss der vorliegenden Erfindung, versteht man ein Mahlen unter Ausschluss von Flüssigkeiten oder, wenn Flüssigkeiten, wie z.B. phasenlenkende Lösungsmittel oder oberflächenaktive Mittel, verwendet werden, dann nur in so kleinen Mengen (höchstens 10,0 Gew-%, bezogen auf das Pigment) oder von solcher Beschaffenheit, dass das Pigment beim Mahlen als Pulver vorliegt. Die Vorvermahlung wird zweckmässig in Gegenwart einer kleinen Menge, 10 % (Gewicht) oder weniger, eines Salzes, wie z.B. wasserfreien Natriumsulfats, durchgeführt. Dadurch wird die Explosionstendenz des Mahlpulvers unterbunden.

Wenn γ-Chinacridon als Ausgangsprodukt verwendet wird, muss der Vorvermahlungsvorgang um eine vollständige Umwandlung in α-Chinacridon zu gewährleisten, genügend lange dauern (im allgemeinen zwischen 48 und 96 Stunden), damit dann im anschliessenden Nassmahlvorgang das β_{I}-Chinacridon in der Partikelgrösse mit der gewünschten spezifischen Oberfläche erhalten wird. Wird β-Chinacridon als Ausgangsprodukt verwendet, so muss der Vorvermahlungsvorgang so lange dauern, bis die gewünschte Partikelgrössenverteilung erreicht ist.

Für die Nassmahlung empfehlen sich Temperaturen zwischen 20 und 50°C.

Für die Herstellung der β_{I}-Modifikation eignen sich verschiedene Alkohole, darunter z.B. niedrigsiedende Alkohole, wie Methanol, Ethanol, Butanol und Pentanol und ferner Glykole, wie Ethylenglykol. Bevorzugt sind Methanol und Ethanol. Auch als Basen eignen sich verschiedene anorganische und organische Basen, darunter z.B. Alkalimetallhydroxid und Lithiumhydroxid und ferner quaternäre Ammoniumhydroxide, wie Benzyltrimethylammoniumhydroxid. Natrium- und Kaliumhydroxid werden bevorzugt. Wird die Vermahlung ohne Basenzusatz durchgeführt, so wird die Umwandlung in die β_{I}-Modifikation und das Kristallwachstum beträchtlich reduziert und man erhält praktisch nur die β_{II}-Modifikation.

Der Alkohol wird zweckmässig in einer 5- bis 25-fachen, bevorzugt in einer 14- bis 18-fachen Gewichtsmenge, bezogen auf das Pigment, eingesetzt.

Ist eine ungenügende Menge Base vorhanden, dann tritt die Umwandlung in die β_{I}-Modifikation nur sehr langsam und unvollständig ein. Die Basenkonzentration hängt vom verwendeten Alkohol ab. Bevorzugt wird bei Verwendung von Methanol eine Menge von 1 bis 10 und insbesondere 2 bis 6 Gew.-% Base, bezogen auf Methanol eingesetzt. Bei 4 % KOH-Konzentration werden z.B. 4 g KOH (100 %-ig) als 44 %-ige wässrige Lösung in 100 ml Methanol eingesetzt. In Ethanol ergibt eine bestimmte Basenkonzentration ein ähnliches Partikelwachstum und eine ähnliche Modifikationseinheit, wie eine merklich höhere Basenkonzentration in Methanol. Im allgemeinen hängen die Bildung eines Salzes und dessen Löslichkeit von der Beschaffenheit der Lösungsmittel/Basen-Zusammensetzung ab. Bei der gewünschten Basenkonzentration ist keine Bildung von Natrium-, Kalium- oder quaternäres Ammoniumsalz des Chinacridons ersichtlich, das wegen seiner deutlich blauen Farbe leicht erkennbar wäre.

Wenn erwünscht können für den Alkohol/Base-Mahlvorgang (sowohl im ein-wie im zweistufigen Verfahren) oberflächenaktive Mittel, Verdünnungsmittel oder wachstumshemmende Mittel zugesetzt werden, unter der Bedingung, dass diese Additive durch das basische Medium nicht desaktiviert werden. Der einfache Zusatz von anionischen, kationischen oder nichtionogenen Tensiden kann z.B. die Deckkraft der erfindungsgemäss hergestellten Pigmente noch zusätzlich verbessern.

Da die endgültige Partikelgrösse während des Nassmahlvorganges erzeugt wird, kann das Produkt, wenn keine Extraktion mit Säure nötig ist, direkt aus der Mahlaufschlämmung nach Entfernung der Mahlhilfsmittel isoliert werden. Allerdings wird das Pigment am besten dadurch isoliert, dass zuerst der Alkohol durch Destillation entfernt wird. Nachdem die Mahlhilfsmittel entfernt und von anhaftendem Pigment sauber gewaschen worden sind, wird die Pigmentaufschlämmung entweder dampfdestilliert oder mit Wasser verdünnt und der Alkohol abdestilliert bis der Rückstand im wesentlichen alkoholfrei ist. Der Alkohol kann somit zurückgewonnen werden und das Pigment durch Filtrieren der zurückgebliebenen nichtbrennbaren Aufschlämmung und Neutralwaschen mit Wasser isoliert werden. Man erhält ein magentafarbenes Pigment, das eine deutliche Nuancenverschiebung im Vergleich zum bekannten und im Handel erhältlichen β-Chinacridon aufweist. Das Pigment zeigt eine ausgezeichnete Wetterbeständigkeit und sehr gute Deckkraft. Dank diesen Eigenschaften ist es sehr geeignet zum Färben von hochmolekularem organischem Material und insbesondere für die Herstellung von Lacken, bevorzugt Automobillacken, allein oder im Gemisch mit anderen verträglichen Pigmenten zur Erzeugung von ausserordentlich intensiven roten Volltonausfärbungen in verschiedenen Nuancen.

Wie viele andere Pigmente, kann das erfindungsgemässe β_{I}-Chinacridon auch mit Vorteil nach bekannten Methoden oberflächenbehandelt werden, um seine Eigenschaften in Lacksystemen zu verbessern. Additive, die zur Verminderung oder Vermeidung von Flokkulation, sowie zur Verbesserung der Dispersionsstabilität dienen, können vorteilhaft mit dem erfindungsgemässen Pigment verwendet werden. Das so behandelte Pigment zeigt hervorragende Eigenschaften allein oder in Mischung mit anderen Pigmenten zur Erzeugung von roten Volltonausfärbungen in verschiedenen Lacksystemen, jedoch bevorzugt in Automobillacksystemen des Acryl-, Alkyd-und Polyestertyps. 2-Phthalimidomethylchinacridon, Chinacridonsulfonsäure und andere ähnliche Derivate können z.B. als Antiflokkulationsmittel dienen. In bestimmten Systemen kann der Zusatz von polymeren Dispergiermittel die Eigenschaften des Pigments noch zusätzlich verbessern.

Das erfindungsgemässe β_{I}-Chinacridon wird in Mengen von 0,01 bis 30 Gew.-%, bevorzugt 0,1 bis 10 Gew.-% bezogen auf das zu färbende hochmolekulare organische Material eingesetzt und in diesem zweckmässig bei Temperaturen zwischen 20 und 300°C eingearbeitet.

Das erfindungsgemässe β_{I}-Chinacridon lässt sich beispielsweise als Pulver, Teig, Flushpaste und Zubereitung anwenden und eignet sich z.B. für Druckfarben, Leimfarben, Binderfarben oder Lacke aller Art, wie physikalisch und oxydativ trocknende Lacke, säure-, amin- und peroxidhärtende Lacke oder Polyurethanlacke. Das Pigment kann auch zum Färben von synthetischen, halbsynthetischen oder natürlichen makromolekularen Stoffen verwendet werden, wie Polyvinylchlorid, Polystyrol, Polyäthylen, Polyestern, Phenoplasten, Aminoplasten und Gummi. Weitere Anwendungsgebiete sind das Färben von natürlichen, regenerierten oder künstlichen Fasern, wie Glas-, Silikat-, Asbest-, Holz-, Cellulose-, Acetylcellulose-, Polyacrylnitril-, Polyester-, Polyurethan- und Polyvinylchloridfasern oder deren Gemischen, eventuell zusammen mit anderen organischen oder anorganischen Pigmenten. Man erhält mit dem neuen Pigment Drucke, Lackierungen, Anstriche, Beläge, Beschichtungen, geformte Gebilde, wie Folien, Fäden, Platten, Blöcke, Granulate und Stäbe, mit brillanter magenta Farbe von hervorragender Dauerhaftigkeit.

Die erfindungsgemässen farbstarken und deckenden Pigmente können zum Färben von festen, elastischen, pastenartigen, dickflüssigen, dünnflüssigen oder thixotropen Massen verwendet und in diese nach an sich bekannten Verfahren eingearbeitet werden. Wasserhaltige Teige können beispielsweise durch Einrühren des Pigments in Wasser, gegebenenfalls unter Zusatz eines Netz- oder Dispergiermittels oder durch Einrühren oder Einkneten des Pigments in ein Dispergiermittel in Gegenwart von Wasser und gegebenenfalls von organischen Lösungsmitteln oder Oelen erhalten werden. Diese Teige können beispielsweise wiederum zur Herstellung von Flushpasten, Druckfarben, Leimfarben, Kunststoffdispersionen und Spinnlösungen verwendet werden. Das Pigment kann aber auch durch Einrühren, Einwalzen, Einkneten oder Einmahlen in Wasser, organische Lösungsmittel, nicht trocknende Oele, trocknende Oele, Lacke, Kunststoffe oder Gummi gebracht werden. Schliesslich ist es auch möglich, das Pigment durch trockenes Mischen mit organischen oder anorganischen Massen, Granulaten, Faserstoffen, Pulvern und anderen Pigmenten zu Stoffmischungen zu verarbeiten.

Das erfindungsgemäss erhältliche Pigment zeichnet sich nicht nur durch ausgezeichnete Deckkraft, hervorragende Reinheit des Farbtons, und gute Allgemeinechtheiten, wie Licht- und Wetterbeständigkeit und Unempfindlichkeit gegen Lösungsmittel und Weichmacher, sondern auch durch seine vorzügliche Hitzebeständigkeit, aus. Dadurch kann das erfindungsgemäss erhältliche Pigment in Polyethylen hoher oder niedriger Dichte oder in Polypropylen eingearbeitet werden, ohne dass die Farbe durch die hohen Verarbeitungstemperaturen abgestumpft wird.

In den nachfolgenden Beispielen, die die vorliegende Erfindung weiter erläutern, sind Prozente als Gewichtsprozente ausgedrückt.

Beispiel 1: In eine handelsübliche Mühle (2,84 ℓ) werden 2500 g Keramikperlen von 1,6 - 2,5 mm Durchmesser, bestehend im Durchschnitt aus ca. 69 % ZrO₂ und 31 % SiO₂, 50 g rohes β-Chinacridon, 791 g Methanol und 75 g 44 %-ige wässrige Kalilauge gegeben.

Die Mühle wird bei ca. 30°C 72 Stunden bei 68 U/Min., ca. 74 % der kritischen Geschwindigkeit, gedreht ("kritische Geschwindigkeit" ist die Geschwindigkeit, bei der die Fliehkraft die Schwerkraft aufhebt, so dass die Mahlhilfsmittel gegen die Wand der Mühle gehalten werden). Die Mühle wird in ein Sieb, das die Perlen zurückhält, geleert und die Perlen mit 630 g Methanol gewaschen, bis das Pigment praktisch vollständig in der abfiltrierten Aufschlämmung aufgefangen wird. Die Aufschlämmung wird in einen Destillationskolben übergeführt und das Methanol wird, zusammen mit etwas Wasser, abdestilliert. Die Temperatur steigt während der Destillation langsam an. Wenn sie 95°C erreicht hat, hält man sie noch 10 Minuten an, dann wird die Destillation abgebrochen. Das Produkt wird durch Filtrieren abgetrennt und das Filtergut mit warmem Wasser neutral gewaschen. Nach dem Trocknen bei 80°C erhält man 48,0 g Pigment. Das Röntgenbeugungsdiagramm entspricht dem oben für die erfindungsgemässe β_{I}-Modifikation beschriebenen. Das erhaltene Produkt weist eine spezifische Oberfläche von 17,0 m²/g.

Nach üblichen Methoden in einem Oeldruckfarbensystemn eingearbeitet (z.B. durch Ausreiben auf einem Hoover-Muller in lithographischem Firnis), ergibt das Pigment Ausfärbungen, die sich insbesondere durch den deckenden Vollton und Magentafarbe im Weissverschnitt (TiO₂) auszeichnen.

Als Alternative kann die methanolische Aufschlämmung auch mit 1 ℓ Wasser verdünnt werden und der Alkohol abdestilliert werden (bis die Temperatur der Aufschlämmung 95°C erreicht). Das Pigment wird wie oben beschrieben isoliert und man erhält ein Produkt mit denselben Eigenschaften und einer spezifischen Oberfläche von 17,5 m²/g.

Beispiel 2: In eine Pilot-Plant-Mühle werden 454 kg Stahlzylinder von ca. 127 mm Durchmesser und 127 mm Länge, 45,4 kg 100 mm-Nägel, 18,16 kg rohes β-Chinacridon und 1,816 kg wasserfreies Natriumsulfat gegeben. Die Mühle wird bei 55-60°C 50 Stunden bei 40 U/Min. ca. 75 % der kritischen Geschwindigkeit gedreht. Die Mühle wird geöffnet und in ein Sieb, das die Stahlzylinder und die Nägel zurückhält, geleert. Ein Anteil des erhaltenen Mahlpulvers (132 g) wird in eine 2,85 ℓ-Kugelmühle mit 4,8 kg Stahlschrot von 3,2 mm Durchmesser gegeben. Dazu gibt man noch 791 g Methanol und 75 g 44 %-ige wässrige Kalilauge. Die Mühle wird verschlossen und 72 Stunden bei 68 U/Min. gedreht und danach in ein Sieb, das den Stahlschrot zurückhält, geleert. Die Mahlhilfsmittel werden mit Methanol gewaschen, die Aufschlämmung wird in einen Destillationsapparat übergeführt, mit 1,2 ℓ Wasser verdünnt und destilliert bis die Temperatur der Aufschlämmung 93°C erreicht. Dann wird die Aufschlämmung auf 80-85°C abgekühlt, mit 30 %-iger Schwefelsäure angesäuert bis zum pH 1,4-1,5, eine Stunde bei 80-85°C gehalten und anschliessend filtriert. Der Rückstand wird mit warmem Wasser (60-70°C) säurefrei gewaschen und bei 80°C getrocknet.

Man erhält 113,5 g Pigment, das vorwiegend in der β_{I}-Modifikation vorliegt und eine spezifische Oberfläche von 19,0 m²/g aufweist.

In einem Oeldruckfarben-System eingearbeitet, ergibt das Pigment ähnliche Ausfärbungen, die nur leicht dunkler im Vollton und etwas blauer im Verschnitt (TiO₂) sind, wie diejenigen des Pigments von Beispiel 1.

Beispiel 3:
a) Vermahlen in Alkohol/Base-System
   In eine Labormühle (236 ml) werden 300 g Keramikperlen von 1,6 - 2,5 mm Durchmesser, 79 g Ethanol, 7,5 g 44 %-ige wässrige Kalilauge und 6 g β-Chinacridon (β_{II}) kleiner Partikelgrösse (z.B. ®RT-795-D der CIBA-GEIGY, ohne Verdünnungsmittel) gegeben. Die Mühle wird 72 Stunden mit ca. 75 % der kritischen Geschwindigkeit gedreht. Die Pigmentaufschlämmung wird von den Keramikperlen getrennt und letztere werden mit Methanol gewaschen. Die kombinierten Aufschlämmungen werden Dampfdestilliert, bis die innere Temperatur 95°C erreicht ist, und ca. 15 Minuten bei dieser Temperatur gehalten. Das Pigment wird durch filtrieren abgetrennt, mit Wasser neutral gewaschen und getrocknet. Das erhaltene Pigment (5,5 g), das eine spezifische Oberfläche von 16,5 m²/g aufweist, zeigt das charakteristische Röntgenbeugungsdiagramm der β_{I}-Modifikation.
   In einem Oeldruckfarben-System eingearbeitet, ergibt das Pigment Ausfärbungen, die mit derjenigen von Beispiel 1 mit guter Annäherung vergleichbar sind.
b) Rückflusskochen in Alkohol/Base-System
   In einen 4-Halskolben mit Rührer, Thermometer und Rückflusskühler werden 3 g β-Chinacridon (β_{II}) kleiner Partikelgrösse (z.B. ®RT-795-D der CIBA-GEIGY, ohne Verdünnungsmittel) und danach 39,5 g wasserfreies Ethanol und 2,3 g 50 %-iges Natriumhydroxid gegeben. Die Reaktionsmischung wird unter Rühren 6 Stunden am Rückfluss gekocht. Die heisse Aufschlämmung wird filtriert, der Rückstand wird mit Ethanol und dann mit heissem Wasser neutral gewaschen. Das erhaltene Pigment (2,6 g) liegt vorwiegend als β_{I}-Chinacridon vor und weist eine spezifische Oberfläche von 11,5 m²/g auf.
   In einem Oeldruckfarben-System eingearbeitet, ergibt das Pigment Ausfärbungen, die mit derjenigen von Beispiel 1 nahezu identisch sind. Sie sind erheblich gelber und viel intensiver im Vollton und gelber im Verschnitt im Vergleich zu mit β_{II}-Chinacridon von vergleichbarer spezifischer Oberfläche erhaltenen Ausfärbungen.

Beispiel 4: Beispiel 2 wird in der genau gleichen Weise wiederholt, mit der einzigen Ausnahme, dass statt 4,8 kg Stahlschrot 2,5 kg Keramikperlen von 1,6 - 2,5 mm Durchmesser im zweiten Mahlvorgang eingesetzt werden. Man erhält 109,7 g Pigment mit einer spezifischen Oberfläche von 18,5 m²/g, das in einem Oeldruckfarben-System eingearbeitet nahezu die gleichen Eigenschaften zeigt, wie das Produkt von Beispiel 2.

Wiederholt man das gleiche Verfahren mit dem Unterschied, dass die Extraktion mit Säure ausgelassen wird und das Pigment nach dem Abdestillieren des Alkohols isoliert wird, so erhält man 111,8 g des magentafarbenen Pigments. Das Produkt liegt vorwiegend in der β_{I}-Modifikation vor und weist eine spezifische Oberfläche von 19,4 m²/g auf. Seine färberischen Eigenschaften sind denen des ohne Säurebehandlung erhaltenen Produkts ähnlich.

Beispiel 5: In eine Labor-Kugelmühle (945 ml) werden 850 g Keramikperlen von 1,6 - 2,5 mm Durchmesser, bestehend im Durchschnitt aus ca. 69 % ZrO₂ und 31 % SiO₂, 12 g rohes γ-Chinacridon und 1,2 g wasserfreies Natriumsulfat gegeben. Die Mühle wird bei Raumtemperatur 72 Stunden mit ca. 74 % der kritischen Geschwindigkeit gedreht. Ein kleiner Anteil an mit Pigment beschichteten Perlen wird von der Mühle entfernt und das Pigment wird mit Methanol ausgewaschen. Die Aufschlämmung wird filtriert und das getrocknete Produkt einer Röntgenbeugungsanalyse unterworfen. Das Produkt zeigt geringere Kristallinität als das Ausgangsprodukt und besteht ausschliesslich aus α-Chinacridon.

In eine 236 ml-Labor-Kugelmühle werden 305 g an mit α-Chinacridon beschichteten Perlen aus dem obigen Mahlvorgang, 79,1 g Methanol und 10 g 50 %-ige wässrige Natronlauge gegeben. Die Mühle wird 72 Stunden mit ca. 75 % der kritischen Geschwindigkeit gedreht und dann in ein Sieb, das die Keramikperlen zurückhält, geleert. Die Perlen werden mit Methanol gewaschen. Die Aufschlämmung wird zur Flokkulation des Pigments mit Wasser verdünnt, das Pigment wird durch filtrieren abgetrennt und mit Wasser neutral gewaschen. Nach dem Trocknen erhält man 3,7 g eines Pigments, welches bezüglich Beschaffenheit und Eigenschaften mit dem Produkt von Beispiel 2 vergleichbar ist.

Beispiel 6: Zu 825 g konzentrierter Schwefelsäure werden unter Rühren, bei einer Temperatur unter 20°C, 110 g rohes γ-Chinacridon gegeben. Man rührt etwa 15 Minuten bis zur vollständigen Lösung weiter. Die erhaltene Lösung wird innerhalb von 3 Minuten unter kräftigem Rühren in 2750 g einer Wasser/Eis-Mischung zugegeben, wobei die Temperatur unter 40°C gehalten werden soll. Die erhaltene wässrige Pigmentaufschlämmung wird eine Stunde bei Zimmertemperatur weitergerührt, dann wird das Produkt durch filtrieren abgetrennt und mit Wasser säurefrei gewaschen. Nach dem Trocknen erhält man 107 g Pigment mit dem charakteristischen Röntgenbeugungsdiagramm des α-Chinacridons.

In eine handelsübliche Kugelmühle (2,85 ℓ) enthaltend 2,5 kg Keramikperlen von 1,6 - 2,5 mm Durchmesser werden 50 g des wie oben beschrieben erhaltenen α-Chinacridons, 791 g Methanol und 75 g 44 %-ige wässrige Kalilauge gegeben. Mahlung und Isolierung werden genau wie in Beispiel 1 beschrieben vorgenommen. Man erhält 48,2 g eines Produktes dessen Röntgenbeugungsdiagramm und Eigenschaften (bei Einarbeitung in einem Oeldruckfarben-System) mit denjenigen des Produktes von Beispiel 2 identisch sind. Die spezifische Oberfläche beträgt 17,2 m²/g.

Beispiel 7: Beispiel 1 wird wiederholt mit der Ausnahme, dass 65,5 g 36 %-ige Natronlauge anstelle der 75 g 44 %-iger Kalilauge verwendet werden. Die Aufarbeitung wird genau wie in Beispiel 1 durchgeführt. Das erhaltene Produkt zeigt ein Röntgenbeugungsdiagramm und Eigenschaften (bei Einarbeitung in einem Oeldruckfarben-System), die mit denjenigen des Produktes von Beispiel 1 identisch sind. Die spezifische Oberfläche beträgt 17,2 m²/g.

Beispiel 8: In eine 236 ml-Labor-Kugelmühle werden 300 g Keramikperlen von 1,6 - 2,5 mm Durchmesser, 79 g wasserfreies Ethanol, 5 g 44 %-ige wässrige Kalilauge und 6 g rohes β-Chinacridon gegeben. Die Mühle wird 72 Stunden mit ca 75 % der kritischen Geschwindigkeit gedreht. Die Pigmentaufschlämmung wird von den Perlen getrennt und letztere werden mit Wasser gewaschen. Die zusammengelegten Aufschlämmungen werden Dampfdestilliert bis die innere Temperatur 95°C erreicht, 10 Minuten bei dieser Temperatur gehalten und filtriert. Das Filtergut wird mit Wasser neutral gewaschen und getrocknet. Man erhält 5,8 g Pigment, dessen Röntgenbeugungsdiagramm demjenigen von β_{I}-Chinacridon entspricht.

In einem Oeldruckfarben-System eingearbeitet, ergibt das Pigment Ausfärbungen, die leicht gelber im Vollton und etwas farbschwächer im Verschnitt, im Vergleich zu denen von Beispiel 1 sind.

Beispiel 9: In eine 236 ml-Labor-Kugelmühle werden 300 g Keramikperlen von 1,6 - 2,5 mm Durchmesser, 71 g Methanol, 39 g einer 40 %-igen Lösung von Benzyltrimethylammoniumhydroxid in Methanol und 6 g rohes β-Chinacridon gegeben. Mahlung und Aufarbeitung werden wie in Beispiel 8 beschrieben durchgeführt. Man erhält 5,5 g Pigment, das in einem Oeldruckfarben-System eingearbeitet, mit guter Annäherung die gleichen Eigenschaften zeigt, wie dasjenige von Beispiel 1.

Beispiel 10: Beispiel 1 wird wiederholt, wobei nachdem der Alkohol abdestilliert ist und die wässrige Aufschlämmung 10 Minuten bei 95°C gehalten worden ist, auf 80-85°C abgekühlt und mit 40 %-iger Schwefelsäure auf pH 4 angesäuert wird. Die Aufschlämmung wird mit 9,8 g Alaun versetzt und dann eine halbe Stunde mit einer wässrigen Aufschlämmung aus 2,0 g Chinacridonmonosulfonsäure und 66 ml Wasser behandelt. Dies führt zu einer Ablagerung von ca. 4,1 % Aluminiumchinacridonmonosulfonat auf die Oberfläche des Pigments. Man heizt eine halbe Stunde weiter auf 80-85°C, filtriert, wäscht mit Wasser säurefrei und trocknet. Man erhält 50,3 g Pigment mit einer spezifischen Oberfläche von 14,5 m²/g.

Zur Bestimmung seiner Eigenschaften wird das Pigment nach üblichen Methoden im pigmentierten Grundlack eines Zweischicht-Acrylharz-Einbrennlacks eingearbeitet. Das Fliessverhalten der Lackanreibung, welche 11,98 % Pigment und 39,6 % Gesamtfestkörper enthält und deren Pigment/Bindemittel-Verhältnis 0,43 beträgt, wird mit einem Brookfield Digital Viskosimeter RVTD® (10 U/Min, Spindel Nr. 3, bei 23°C) ermittelt und in Centipoise ausgedrückt.

Nach dem Auflacken der Lackanreibung zum fertigen Lack wird eine Volltonapplikation (Aluminiumplatte, 10 cm x 15 cm, mit grauer Acrylgrundierung überlackiert mit einer solchen Schicht, dass über einem Schwarz/Weiss-Karton visuell eine vollständige Deckfähigkeit gewährleistet wird) angefertigt und getrocknet. Der Glanz wird bei 20°/20° mit einem Glanzmessgerät Glossguard System 20/60/85 G 67526® gemessen. Der Spiegelglanz (DOI = Distinctness Of Image) wird nach ASTM-Standardmethode mit Hilfe eines Spiegelglanz-Messgeräts der Paul Gardener Company Inc. gemessen. Die Resultate sind in der nächstfolgenden Tabelle wiedergegeben und zeigen deutlich die Ueberlegenheit des Produktes dieses Beispiels im Vergleich zum unbehandelten Pigment.

| | Viskosität (cps) | Vollton Grundlack | |
|---|---|---|---|
| | | 20° Glanz | DOI |
| Unbehandeltes Pigment | 7110 | 69 | 50 |
| Produkt dieses Beispiels | 30 | 74 | 70 |

Beispiel 11: Das Pigment von Beispiel 1 wird zusammen mit 3 % 2-Phthalimidomethylchinacridon und 6 % eines polymeren Dispergiermittels (erhalten durch Isolierung des trockenen Polymers von DISPERBYK 160® von BYK-Chemie), bezogen auf das Pigment, pulverisiert. Beim Einarbeiten in einem Alkyd-Automobillack-System nach üblichen Methoden erhält man, im Vergleich zum unbehandelten Pigment, eine deutliche Verbesserung des Viskositätsverhaltens der Dispersion, des Glanzes und des Spiegelglanzes (DOI) der erhaltenen Lackierungen.

Die Resultate sind in der nachstehenden Tabelle wiedergegeben (Bestimmungen gemäss den in Beispiel 10 beschriebenen Methoden)

| | Viskosität (cps) | Vollton Grundlack | |
|---|---|---|---|
| | | 20° Glanz | DOI |
| Unbehandeltes Pigment | 610 | 72 | 65 |
| Produkt dieses Beispiels | 130 | 86 | 97 |

Die Lackierungen zeigen die eigenartige Magentanuance des erfindungsgemässen Pigments im Vollton und im Verschnitt (TiO₂) und eine ausserordentlich starke rote Ausfärbung beim Kombinieren des Produktes dieses Beispiels mit C.I. Pigment Orange 36.

Beispiel 12: 500 g HD-Polyethylenflocken werden in einen Banbury-Mixer bei minimaler Drehgeschwindigkeit der Rotoren eingefüllt, gefolgt von 10 g pigmentäres TiO₂, 1 g Pigmentmischung gemäss Beispiel 9 und erneut 500 g HD-Polyethylenflocken. Die Drehgeschwindigkeit der Rotoren wird auf 200 U/Min gesteigert und der Mischvorgang bei 116°C solange weitergeführt bis ein homogenes Gemisch von Kunststoff und Pigment erhalten wird. Die erstarrte Mischung wird in groben Teilen zerschnitten, zu grobem Pulver granuliert und in fünf Ansätze, jeweils bei 204°C, 232°C, 260°C, 288°C und 316°C, zu Plättchen spritzgegossen. Die Farbeinbusse während des Extrudiervorganges wird durch ein Vergleich der bei den verschiedenen Temperaturen erhaltenen Plättchen bestimmt. Die Farbabweichung der bei den vier höheren Temperaturen erzeugten Plättchen wird visuell oder instrumentell im Vergleich mit der Farbe des bei 204°C erhaltenen Plättchens bestimmt. Die Note 9,5 bedeutet nahezu einwandfreie Farbenstabilität bei der angegebenen Temperatur; die Note 8 bedeutet leichte Farbänderung und Note 6 bedeutet deutliche Farbänderung. Die Resultate sind in der nachstehenden Tabelle wiedergegeben

| Farbwerte bei Extrudiertemperatur (°C) | | | | | |
|---|---|---|---|---|---|
| | 204 | 232 | 260 | 288 | 316 |
| Pigmentmischung von Beispiel 9 | Magenta | 9,5 | 9,0 | 8,6 | 8,5 |

Die Pigmentmischung gemäss Beispiel 9 zeigt demnach eine hohe Hitzebe ständigkeit.

## Patentansprüche (Patentansprüche für folgende(n) Vertragsstaat(en): BE, CH, DE, FR, GB, IT, LI, NL)

1. β-Chinacridon-Pigment in seiner magentafarbenen Modifikation, deren Röntgenbeugungsdiagramm durch die Netzebenenabstände 14,88 Å und 3,26 Å starker Intensität, 7,49 Å, 5,59 Å, 5,50 Å und 3,99 Å mittlerer Intensität und 5,05 Å, 4,77 Å, 4,24 Å und 3,73 Å schwacher Intensität charakterisiert ist.

2. β-Chiacridon-Pigment gemäss Anspruch 1, dadurch gekennzeichnet, dass es in einer durchschnittlichen mittleren Partikelgrösse zwischen 0,2 und 0,8 »m vorliegt.

3. β-Chiacridon-Pigment gemäss Anspruch 1 in Kombination mit einer Menge von weniger als 50 Gew.% der violetten β-Chinacridonmodifikation, deren Röntgenbeugungsdiagramm durch die Netzebenenabstände 15,23 Å, 7,55 Å, 5,47 Å, 4,06 Å und 3,31 Å charakterisiert ist.

## Patentansprüche (Patentansprüche für folgende(n) Vertragsstaat(en): ES)

1. Verfahren zum Färben von hochmolekularem organischem Material in der Masse, dadurch gekennzeichnet, dass man das hochmolekulare organische Material bei Temperaturen zwischen 20 und 300°C mit 0,01 bis 30 Gew.-%, bezogen auf das hochmolekulare organische Material eines β-Chinacridon-Pigments in seiner magentafarbenen Modifikation, deren Röntgenbeugungsdiagramm durch die Netzebenenabstände 14,88 Å und 3,26 Å starker Intensität, 7,49 Å, 5,59 Å, 5,50 Å und 3,99 Å mittlerer Intensität und 5,05 Å, 4,77 Å, 4,24 Å und 3,73 Å schwacher Intensität charakterisiert ist, versetzt, das erhaltene Gemisch chemisch oder mechanisch behandelt und die erhaltene Zubereitung anschliessend zu Fasern oder Gegenständen verformt oder damit Gegenstände überzieht.

2. Verfahren gemäss Anspruch 1, dadurch gekennzeichnet, dass das β-Chinacridon-Pigment in einer durchschnittlichen mittleren Partikelgrösse zwischen 0,2 und 0,8 »m vorliegt.

3. Verfahren gemäss Anspruch 1, dadurch gekennzeichnet, dass das β-Chinacridon-Pigment in Kombination mit einer Menge von weniger als 50 Gew.% der violetten β-Chinacridonmodifikation, deren Röntgenbeugungsdiagramm durch die Netzebenenabstände 15,23 Å, 7,55 Å, 5,47 Å, 4,06 Å und 3,31 Å charakterisiert ist, eingesetzt wird.

## Claims (Claims for the following Contracting State(s): BE, CH, DE, FR, GB, IT, LI, NL)

1. A β-quinacridone pigment in its magenta-coloured modification whose X-ray diffraction pattern is characterized by interplanar spacings of 14.88Å and 3.26Å of high intensity, 7.49Å, 5.59Å, 5.50Å and 3.99Å of medium intensity, and 5.05Å, 4.77Å, 4.24Å and 3.73Å of weak intensity.

2. A β-quinacridone pigment according to claim 1, which is present in an average mean particle size of between 0.2 and 0.8 »m.

3. A β-quinacridone pigment according to claim 1 in combination with a quantity of less than 50% by weight of the violet β-quinacridone modification, whose X-ray diffraction pattern is characterized by interplanar spacings of 15.23Å, 7.55Å, 5.47Å, 4.06Å and 3.31Å.

## Claims (Claims for the following Contracting State(s): ES)

1. A method of mass-colouring high molecular weight organic material, which comprises adding to the high molecular weight organic material, at temperatures of between 20 and 300°C, from 0.01 to 30% by weight, based on the high molecular weight organic material, of a β-quinacridone pigment in its magenta-coloured modification whose X-ray diffraction pattern is characterized by interplanar spacings of 14.88Å and 3.26Å of high intensity, 7.49Å, 5.59Å, 5.50Å and 3.99Å of medium intensity, and 5.05Å, 4.77Å, 4.24Å and 3.73Å of weak intensity, subjecting the resulting mixture to chemical or mechanical treatment, and then shaping the resulting composition into fibres or articles, or using it to coat articles.

2. A method according to claim 1, wherein the β-quinacridone pigment is present in an average mean particle size of between 0.2 and 0.8 »m.

3. A method according to claim 1, wherein the β-quinacridone pigment is employed in combination with a quantity of less than 50% by weight of the violet β-quinacridone modification whose X-ray diffraction pattern is characterized by interplanar spacings of 15.23Å, 7.55Å, 5.47Å, 4.06Å and 3.31Å.

## Revendications (Revendications pour l'(les) Etat(s) contractant(s) suivant(s): BE, CH, DE, FR, GB, IT, LI, NL)

1. Pigment de β-quinacridone en sa modification de couleur magenta, dont le diagramme de diffraction de rayons X est caractérisé par les distances entre plans réticulaires 14,88 Å et 3,26 Å à forte intensité, 7,49 Å, 5,59 Å, 5,50 Å et 3,99 Å à moyenne intensité et 5,05 Å, 4,77 Å, 4,24 Å et 3,73 Å à faible intensité.

2. Pigment de β-quinacridone selon la revendication 1, caractérisé en ce qu'il est en particules de dimension moyenne, en moyenne de 0,2 à 0,8 »m.

3. Pigment de β-quinacridone selon la revendication 1 associé à moins de 50% en poids de la modification violette de β-quinacridone, dont le spectre de diffraction de rayons X est caractérisé par les distances entre plans réticulaires 15,23 Å, 7,55 Å, 5,47 Å, 4,06 Å et 3,31 Å.

## Revendications (Revendications pour l'(les) Etat(s) contractant(s) suivant(s): ES)

1. Procédé de coloration de matières organiques de poids moléculaire élevé en masse, procédé caractérisé en ce que l'on ajoute à la matière organique de poids moléculaire élevé, à des températures de 20 à 300°C, 0,01 à 30% en poids, rapporté à la matière organique à poids moléculaire élevé, d'un pigment β-quinacridone en sa modification de couleur magenta, dont le diagramme de diffraction de rayon X est caractérisé par les distances entre plans réticulaires 14,88 Å et 3,26 Å à forte intensité, 7,49 Å, 5,59 Å, 5,50 Å, et 3,99 Å à moyenne intensité et 5,05 Å, 4,77 Å, 4,24 Å et 3,73 Å à faible intensité, puis on traite le mélange obtenu par voie chimique ou mécanique et on façonne la préparation obtenue pour des fibres ou des articles divers ou bien on en recouvre des articles.

2. Procédé selon la revendication 1, caractérisé en ce que le pigment de β-quinacridone est en particules d'une dimension moyenne, en moyenne de 0,2 à 0,8 »m.

3. Procédé selon la revendication 1, caractérisé en ce que le pigment de β-quinacridone est employé associé à moins de 50% en poids de la modification violette de β-quinacridone, dont le spectre de diffraction de rayons X est caractérisé par les distances entre plans réticulaires 15,23 Å, 7,55 Å, 5,47 Å, 4,06 Å et 3,31 Å.
